# EUROPÄISCHE PATENTSCHRIFT

(11) **EP 2 476 087 B1**
(45) Veröffentlichungstag und Bekanntmachung des Hinweises auf die Patenterteilung: **11.11.2015**
(21) Anmeldenummer: 10752728.5
(22) Anmeldetag: 03.09.2010
(51) Int. Cl.: G06F 21/31, G06Q 20/00

(54) **BEZAHLSYSTEM, EINKAUFSSYSTEM UND VERFAHREN ZUM DURCHFÜHREN EINER VIELZAHL VON BEZAHLVORGÄNGEN**
PAYMENT SYSTEM, ACQUISITION SYSTEM FOR A PLURALITY OF PAYMENT PROCESSES
SYSTÈME DE PAIEMENT, SYSTÈME D'ACHAT ET PROCÉDÉ DE RÉALISATION D'UNE PLURALITÉ DE PROCESSUS DE PAIEMENT

(30) Priorität: 08.09.2009 DE 102009040575; 28.10.2009 DE 102009050985
(43) Veröffentlichungstag der Anmeldung: 18.07.2012
(73) Patentinhaber: LaterPay GmbH, 80333 München (DE)
(72) Erfinder: ENE, Cosmin-Gabriel, 80469 München (DE)
(74) Vertreter: Bohnenberger, Johannes
(86) Internationale Anmeldenummer: PCT/EP2010/005435
(87) Internationale Veröffentlichungsnummer: WO 2011/029560

## Beschreibung

Die Erfindung betrifft ein Bezahlsystem gemäß dem Anspruch 1, ein Einkaufssystem gemäß dem Anspruch 5 und ein Verfahren zur Durchführung einer Vielzahl von Bezahlvorgängen gemäß dem Anspruch 8.

Es sind Einkaufssysteme bekannt, bei denen eine Vielzahl von Webservern über ein Netzwerk, meist das Internet, miteinander verbunden ist, um einem Käufer den Einkauf von Waren und/oder Dienstleistungen zu ermöglichen. Üblicherweise wählt der Kunde einen bestimmten virtuellen Marktplatz aus, sucht dort nach Waren und Dienstleistungen, legt diese in einen virtuellen Einkaufswagen ab und bezahlt am Ende des Einkaufsvorgangs die Waren. Der Bezahlvorgang ist üblicherweise sehr aufwändig, da es notwendig ist, dass der entsprechende Benutzer bzw. Einkäufer ausreichend authentifiziert ist. Hierfür werden meist der Name und Adressdaten abgefragt. Für den Bezahlvorgang muss der Benutzer Konto- oder Kreditkarteninformationen eingeben, die eine Abbuchung des zu zahlenden Betrags ermöglichen. Der Vorgang des Registrierens, d. h. das Eingeben der Namens- und Adressdaten und/oder der Konto- oder Kreditkartendaten ist aufwändig. Ein Hauptproblem besteht darin, dass Kunden sich bei geringen Beträgen von wenigen Cent bis einem Euro (€0,01-€1,00) erst gar nicht registrieren wollen. Der Aufwand, den es zu betreiben gilt, um sich für geringe Cent Beträge Güter/Informationen auf den Marktplätzen zu beschaffen, ist zu groß und steht in keinem Verhältnis zum tatsächlich Erworbenen. So ist insbesondere im Bereich der Zahlungen unter €1 gar kein tatsächlicher Markt vorhanden, weil er aufgrund der Aufwand/Nutzen Relation erst gar nicht entstehen kann.

Des Weiteren möchten die einzelnen Benutzer gerne sicherstellen, dass deren Daten vertraulich behandelt werden. Üblicherweise geben die Benutzer nur dann ihre Daten preis, wenn sie dem entsprechenden Marktplatz vertrauen. Somit ist es schwierig für kleine Unternehmen, entsprechende Marktplätze oder Onlineshops aufzubauen.

Für die monetäre Abwicklung des Einkaufs haben sich zwischenzeitlich Dienstleister etabliert, die Bezahlsysteme anbieten, bei denen man sich einmalig registrieren muss, um dann entsprechende Bezahlvorgänge bei zahlreichen Onlineshops über diesen einen Dienstleister abwickeln zu können. Auch die Registrierung für entsprechende zentrale Bezahlsysteme ist sehr aufwändig. Des Weiteren entstehen bei einem entsprechenden Bezahlvorgang Kosten, die unter anderem von den Onlineshops zu tragen sind.

Insgesamt lässt sich feststellen, dass die Hindernisse und die Hemmschwellen, die mit einem entsprechenden Einkauf im Internet verbunden sind, derart zahlreich bzw. hoch sind, dass potentielle Käufer häufig davon abgeschreckt werden, einen entsprechenden Einkauf zu tätigen. Dies gilt insbesondere für Waren oder Dienstleistungen, für deren Erwerb nur sehr geringe Beträge anfallen. So ist es äußerst problematisch, für die Einsicht eines einseitigen Testberichts, die ca. 50 Cent kostet, die vollständige Registrierung eines Benutzers zu verlangen.

Ausgehend von diesem Stand der Technik ist es Aufgabe der vorliegenden Erfindung, ein Bezahlsystem bereitzustellen, das einen sicheren Bezahlvorgang gewährleistet. Des Weiteren soll ein entsprechendes Einkaufssystem und ein Verfahren zum Durchführen einer Vielzahl von Bezahlvorgängen bereitgestellt werden.

Die Aufgabe wird durch ein Bezahlsystem gemäß dem Anspruch 1, ein Einkaufssystem gemäß dem Anspruch 6 und ein Verfahren gemäß dem Anspruch 9 gelöst.

Insbesondere wird die Aufgabe durch ein Bezahlsystem für mindestens einen Onlineshop gelöst, wobei das Bezahlsystem umfasst:
- eine Identifikationseinrichtung zum Erfassen mindestens einer Identifikationsnummer eines Einkäufersystems;
- eine Schnittstelleneinrichtung zum Empfangen und Bestätigen von Abbuchungsaufträgen von dem mindestens einen Onlineshop, wobei die Buchungsaufträge Informationen bezüglich eines an den Onlineshop zu zahlenden Buchungsbetrags umfassen;
- eine Speichereinrichtung zum Speichern der Abbuchungsaufträge in Verbindung mit den zugehörigen Identifikationsnummern;
- eine Abwicklungseinrichtung, die derart ausgebildet ist, dass sie den Gesamtbetrag der Buchungsbeträge bezüglich der Identifikationsnummer überwacht und einen Benutzer des Einkäufersystems nach einem voreingestellten Zeitintervall und/oder beim Überschreiten eines voreingestellten Werts des Gesamtbetrags auffordert sich zu registrieren, um zumindest einen Teil des Gesamtbetrags zu begleichen.

Ein wesentlicher Gedanke der vorliegenden Anmeldung besteht also darin, dass das Bezahlsystem den von einem Benutzer getätigten Kauf in Form eines Abbuchungsauftrags erfasst. Des Weiteren speichert das Bezahlsystem Identifikationsinformationen, die die vorzugsweise eindeutige Identifikation des genutzten Einkäufersystems ermöglichen. Somit werden zunächst keine Informationen bezüglich des Benutzers des Einkäufersystems abgefragt. Theoretisch könnte jeder beliebige Benutzer mit dem Einkäufersystem Kauf- und Bezahlvorgänge vornehmen.

Erst nach dem Überschreiten eines voreingestellten Zeitintervalls und/oder beim Überschreiten eines voreingestellten Werts des Gesamtbetrags, fordert das Bezahlsystem den Benutzer auf, sich zu registrieren, um zumindest einen Teil des Gesamtbetrags zu begleichen. Somit kann der Benutzer vorerst völlig anonym und damit gegenüber jeglichem Betrug gänzlich abgesichert Einkäufe tätigen. Die einzelnen Einkäufe werden dem von ihm genutzten Einkäufersystem, beispielsweise einem PC oder einem Mobilgerät zugeordnet. Erst nach dem Verstreichen einer voreingestellten Frist, oder nachdem ein voreingestellter Gesamtbetrag umgesetzt wurde, muss der Benutzer seine Identität preisgeben oder zumindest Informationen eingeben, die ein Begleichen der Schuld ermöglichen.

Das Bezahlsystem senkt die Eintrittsschwelle zu zu bezahlenden Inhalten im Internet auf ein Minimum, weil es dem Benutzer erlaubt, jetzt zu konsumieren und später zu zahlen. Der Benutzer kann mehrere sehr geringe zu zahlende Beträge (micro payments) ansammeln und diese dann, soweit ein relevanter Betrag zusammengekommen ist, bezahlen. Somit werden auch technische Ressourcen geschont, da nicht für jeden minimalen Bezahlvorgang entsprechende Maßnahmen eingeleitet werden müssen. Des Weiteren kann mittels des Bezahlsystems ein neuer Markt adressiert werden, z.B. der Markt, der sich mit Zahlungen, die sich durch sehr geringe Geldbeträge auszeichnen (z.B. kleiner als 1 Euro), beschäftigt.

Auch kann das erfindungsgemäße Bezahlsystem das Abwickeln entrichten von geringen Beträgen wirtschaftlich machen. So sind die Mindestgebühren für Abbuchung bei Kreditinstituten teilweise um ein Mehrfaches höher als der Wert des gekauften Inhalts (z.B. durchschnittlich 0,20 Euro pro Vorgang). Das erfindungsgemäße Bezahlsystem kann als übergreifender Warenkorb (z.B. über mehrere Webseiten hinweg) dienen und Einkäufe aggregieren. Diese werden kumuliert abgerechnet, wodurch die Gebühren für die Transaktion im Vergleich auf ein Minimum sinken. Die Abbuchungstransaktion wird nur einmal für z.B. 20 Einkäufe abgewickelt, wodurch sich die Nebenkosten, die für die Durchführung der Abbuchung entstehen, senken lassen.
Die Abwicklungseinrichtung kann derart ausgebildet sein, dass es bis zur Registrierung keine persönlichen Daten, insbesondere keine Zahlungsinformationen von dem Benutzer des Einkäufersystems abfragt.

Die Speichereinrichtung kann derart ausgebildet sein, dass sie die Abbuchungsaufträge bis zur Registrierung ausschließlich mit Referenzdaten bezüglich des Einkäufersystems abspeichert.

Die Identifikationseinrichtung kann ein auf dem Einkäufersystem auszuführendes Programm bereitstellen, um die mindestens eine Identifikationsnummer zu erfassen. Häufig ermöglicht bereits das Kommunikationsprotokoll die Erfassung eines entsprechenden Kennzeichens, das vorzugsweise eindeutig auf das Einkäufersystem hinweist. Vorzugsweise wird jedoch ein auf dem Einkäufersystem auszuführendes Programm bereitgestellt, das eine entsprechende Identifikationsnummer zur Identifikation des Einkäufersystems ausliest oder generiert.

Die Schnittstelleneinrichtung kann eine Sperrliste von Identifikationsnummern umfassen und derart ausgebildet sein, dass sie Abbuchungsaufträge ablehnt, die sich auf eine Identifikationsnummer beziehen, die in der Sperrliste enthalten ist, wobei die Abwicklungseinrichtung dazu ausgebildet sein kann, Identifikationsnummern von Einkäufersystemen in der Sperrliste zu speichern, deren Benutzer sich nach dem voreingestellten Zeitintervall und/oder beim Überschreiten des voreingestellten Gesamtbetrags nicht registrieren, um den Gesamtbetrag zumindest teilweise zu begleichen. Somit ist es dem vorliegenden Zahlungssystem möglich, Personen oder Benutzer, die eine "schlechte Zahlungsmoral" haben, auszuschließen und den hieraus entstehenden Schaden zu minimieren. Da das erfindungsgemäße Zahlungssystem vorzugsweise dafür eingesetzt wird, sehr geringe Buchungsbeträge zu begleichen, ist das wirtschaftliche Risiko sehr gering.

Die genannte Aufgabe wird ebenfalls durch ein Einkaufssystem gelöst, das eine Vielzahl von Onlineshops und mindestens ein Bezahlsystem, wie bereits vorab beschrieben, umfasst.

Das Einkaufssystem kann mindestens einen Onlineshop mit einem Webserver zur Bereitstellung eines HTML-basierten Verkaufsportals umfassen, wobei mindestens ein Objekt zur Abwicklung von Buchungsaufträgen in das Verkaufsportal eingebettet ist, das mit dem Bezahlsystem in kommunikativer Verbindung steht. Somit ist eine Interaktion zwischen dem Onlineshop und dem Verkaufsportal möglich, ohne dass der Benutzer hierfür zusätzliche Maßnahmen einleiten muss. Der Onlineshop bettet ein entsprechendes Objekt in seine Internetpräsenz ein und wickelt die Zahlvorgänge über das Objekt, das mit dem Bezahlsystem kommuniziert, ab.

Das eingebettete Objekt kann zur Ausgabe von Informationen bezüglich des Bezahlsystems, insbesondere einer Zahlungsaufforderung und/oder einem Kontostand, ausgebildet sein. Somit muss der Benutzer keinen zusätzlichen Aufwand betreiben, um seinen Kontostand bei dem Bezahlungssystem einsehen zu können. Die entsprechenden Informationen werden als Teil der Internetpräsenz der einzelnen Onlineshops dargestellt. Auch in dem Fall, in dem das Bezahlungssystem Informationen an den Benutzer aussenden möchte, muss das Bezahlungssystem keine aktiven Schritte unternehmen. Vielmehr kann abgewartet werden, bis der Benutzer mit seinem Einkäufersystem einen mit dem Bezahlsystem kommunizierenden Onlineshop besucht. In diesem Fall gibt der Onlineshop entsprechende Informationen für das Bezahlsystem an den Benutzer des Einkäufersystems aus.

Die genannte Aufgabe wird des Weiteren durch ein Verfahren zum Durchführen einer Vielzahl von Bezahlvorgängen gelöst, wobei das Verfahren umfasst:
- ein Speichern einer Identifikationsnummer eines Einkäufersystems, mittels dessen in einem Onlineshop ein Einkauf in Höhe eines bestimmten Einkaufsbetrags getätigt wird,
- ein Speichern des Einkaufsbetrags in Verbindung mit der Identifikationsnummer durch ein Bezahlsystem,
- ein Überwachen des Gesamtbetrags der mittels des Einkäufersystems getätigten Einkäufe durch das Bezahlsystem,
- ein Aussenden einer Aufforderung zur Begleichung mindestens eines Teils des Gesamtbetrags an einen Benutzer des Einkäufersystems, wenn der Gesamtbetrag einen voreingestellten Wert überschreitet und/oder nach dem Ablauf eines voreingestellten Zeitintervalls.

Auch für das Verfahren ergeben sich ähnliche Vorteile wie diese bereits in Verbindung mit dem Bezahlsystem erläutert wurden.

Das Verfahren kann ein Registrieren eines Benutzers nach dem Aussenden der Aufforderung umfassen. Somit erfolgt nicht wie bei dem herkömmlichen System ein unmittelbares Registrieren, um den jeweiligen Einkaufsbetrag auszugleichen. Vielmehr sammelt das Bezahlsystem Einkaufsbeträge über einen längeren Zeitraum und fordert erst später zu einem Ausgleich auf.

Das Registrieren kann ein Erfassen von Konto- und/oder Kreditkarteninformationen umfassen.

Die genannte Identifikationsnummer kann eine Hardwareidentifikationsnummer sein. Vorzugsweise handelt es sich hierbei um eine Hardwareidentifikationsnummer des Einkäufersystems. Derartige Identifikationsnummern sind ein fester Bestandteil üblicher Einkäufersysteme und können zu deren eindeutigen Identifikation genutzt werden. Des Weiteren ist es relativ kompliziert, derartige Nummern derart abzuändern, dass das erfindungsgemäße Bezahlsystem getäuscht wird.

Die Hardwareidentifikationsnummer kann zumindest einen Teil einer MAC-Adresse (Media-Access-Control-Address) und/oder einer Prozessoridentifikationsnummer und/oder einer Festplattenidentifikationsnummer und/oder einer IP-Adresse und/oder andere eindeutige Gerätenummern, z. B. die Unique Device ID (UDID) eines Smart Phones, umfassen.

Die Identifikation des Einkäufersystem kann allein anhand der Hardwareidentifikationsnummer erfolgen. Optional können weitere Mechanismen vorgesehen sein, um den Benutzer und/oder das Einkäufersystem zu identifizieren. Beispielsweise kann ein lokales gemeinsam benutztes Objekt ("Local Shared Object") auf dem Einkäufersystem hinterlegt werden. Hierbei kann es sich um ein Flash Cookie handeln. Um diesen Kenner gegen eine Fälschung abzusichern, kann das Objekt digital signiert werden. Die Signatur kann mittels eines Zertifikats von einer Public-Key-Infrastruktur (PKI) realisiert werden.

Das Zeitintervall kann größer als 10 Tage und/oder größer als 1 Monat und/oder größer als drei Monate sein. Vorzugsweise wird das Zeitintervall von dem Eingang oder der Ausführung eines ersten Buchungsauftrags bezüglich einer bestimmten Identifikationsnummer an berechnet.

US 7,720,752 offenbart ein Bezahlsystem für mindestens einen Onlineshop), umfassend:
- eine Identifikationseinrichtung zum Erfassen mindestens einer Identifikationsnummer eines Einkäufersystems;
- eine Schnittstelleneinrichtung zum Empfangen und Bestätigen von Abbuchungsaufträgen von dem mindestens einen Onlineshop, wobei die Buchungsaufträge Informationen bezüglich eines an den Onlineshop zu zahlenden Buchungsbetrags umfassen;
- eine Speichereinrichtung zum Speichern der Abbuchungsaufträge in Verbindung mit den zugehörigen Identifikationsnummern;
- eine Abwicklungseinrichtung, die derart ausgebildet ist, dass sie den Gesamtbetrag der Buchungsbeträge bezüglich der Identifikationsnummer überwacht und einen Benutzer des Einkäufersystems nach einem voreingestellten Zeitintervall und/oder beim Überschreiten eines voreingestellten Werts des Gesamtbetrags auffordert sich zu registrieren, um zumindest einen Teil des Gesamtbetrags zu begleichen.

Weitere Ausführungsformen ergeben sich anhand der Unteransprüche.

Nachfolgend wird die Erfindung mittels mehrerer Ausführungsbeispiele beschrieben, die anhand von Abbildungen näher erläutert werden. Hierbei zeigen:
- Fig. 1 ein Einkaufssystem mit einem Einkäufersystem, einem Onlineshop und einem Bezahlsystem;
- Fig. 2 die einzelnen Komponenten des Bezahlsystems aus Fig. 1;
- Fig. 3 schematische Datenbankeinträge des Bezahlsystems aus Fig. 1 und 2; und
- Fig. 4 ein Ablaufdiagramm eines erfindungsgemäßen Bestellvorgangs.

In der nachfolgenden Beschreibung werden für gleiche und gleich wirkende Teile dieselben Bezugsziffern verwendet.

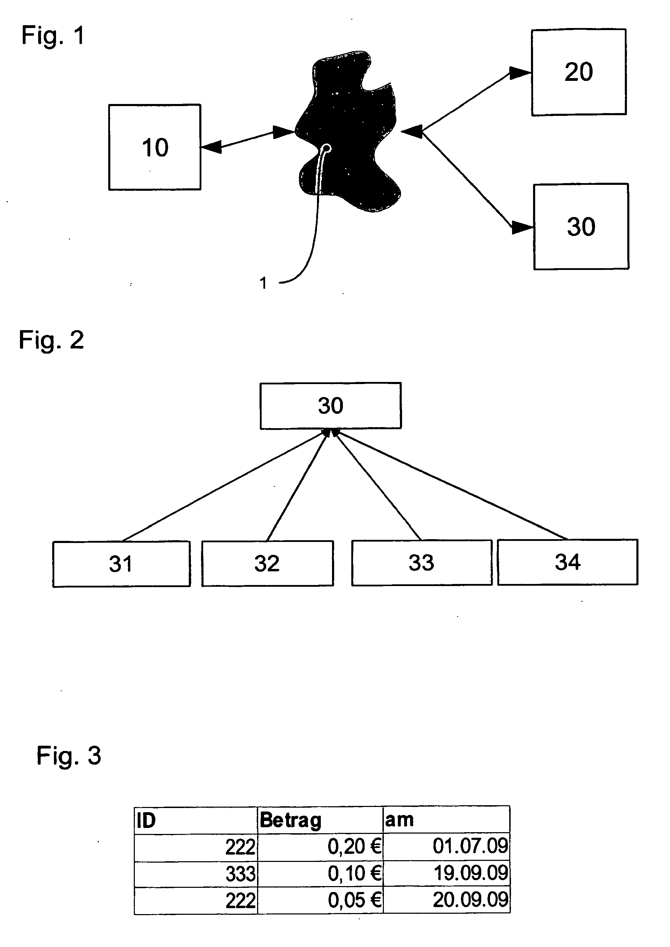

Fig. 1 zeigt das erfindungsgemäße Einkaufssystem. Hierbei sind ein Einkäufersystem 10, beispielsweise ein Laptop, ein PC oder ein mobiles Endgerät, über ein Netzwerk, im vorliegenden Fall das Internet 1 mit einem Onlineshop 20 verbunden. Des Weiteren stehen der Onlineshop 20 und das Einkäufersystem 10 über das Internet 1 mit dem Bezahlsystem 30 in kommunikativer Verbindung. Üblicherweise sind zahlreiche weitere Systeme an das Internet 1 angeschlossen.

Die Fig. 2 zeigt einzelne Komponenten des Bezahlsystems 30. Das erfindungsgemäße Bezahlsystem 30 hat eine Identifikationseinrichtung 31 zum Erfassen mindestens einer Identifikationsnummer des Einkäufersystems 10, eine Schnittstelleneinrichtung 32 zum Empfangen und Bestätigen von Abbuchungsaufträgen von dem Onlineshop 20, wobei die Buchungsaufträge Informationen bezüglich eines an den Onlineshop 20 zu zahlenden Buchungsbetrags umfassen, eine Speichereinrichtung 33 zum Speichern der Abbuchungsaufträge in Verbindung mit den zugehörigen Identifikationsnummern ID und eine Abwicklungseinrichtung 34 zur Abwicklung der eingehenden Bezahlvorgänge.

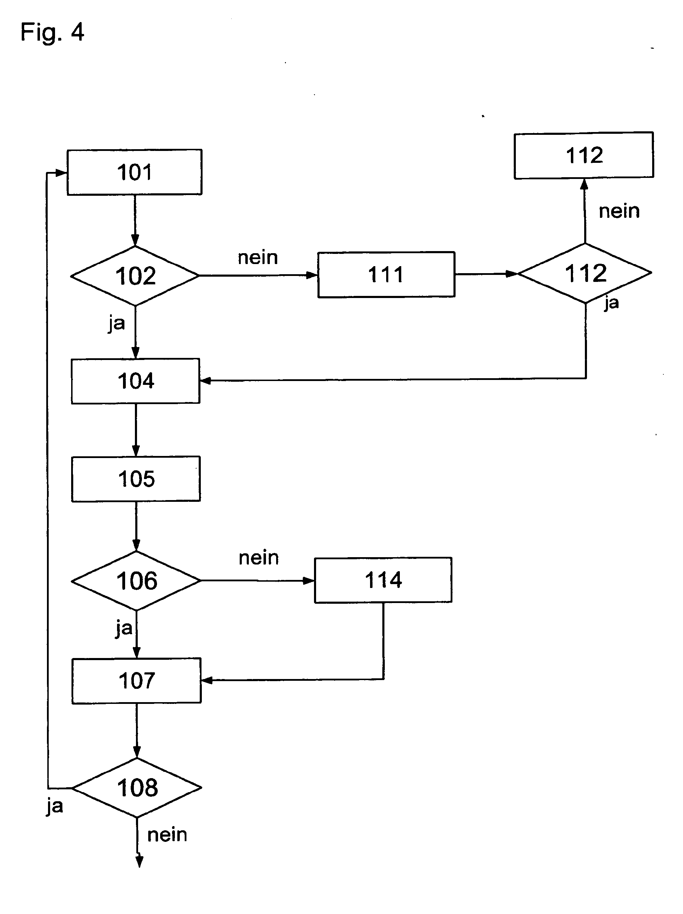

Die einzelnen Einrichtungen werden nachfolgend näher anhand des Ablaufdiagramms aus Fig. 4 erläutert. Ein Ausführungsbeispiel eines mittels des erfindungsgemäßen Bezahlsystems 30 abgewickelten Einkaufs läuft wie folgt ab:
Ein Benutzer gibt in das von ihm bediente Einkäufersystem 10 bestimmte Internetadresse in den dort ablaufenden Browser ein. Der Browser nimmt mit dem oder den Server(n) des Onlineshops 20 Kontakt auf und stellt eine Internetpräsenz des Onlineshops 20 dar. Diese Internetpräsenz enthält ein eingebettetes Objekt, das in kommunikativer Verbindung mit der Schnittstelleneinrichtung 32 des Bezahlsystems 30 steht. Das Bezahlsystem 30 kann also mittels des eingebetteten Objekts eine Identifikationsnummer ID des Einkäufersystems 10 erfassen. Im vorliegenden Fall handelt es sich hierbei um eine MAC-Adresse des Einkäufersystems 10. Damit wird, wie im Schritt 101 der Fig. 4 verdeutlicht, die MAC-Adresse des Einkäufersystems 10 erfasst.

Danach erfolgt eine Überprüfung, ob das Einkäufersystem 10 kreditwürdig ist (vgl. Schritt 102). Im Endeffekt stellt das Bezahlsystem 30, insbesondere die Abwicklungseinrichtung 34 fest, ob zu der empfangenen MAC-Adresse ein Konto existiert. Wenn ein entsprechendes Konto existiert, wird festgestellt, ob bereits Buchungsbeträge auf diesem Konto aufgelaufen sind. Wenn dies der Fall ist, werden die einzelnen Buchungsbeträge summiert. Soweit die Buchungsbeträge einen vorgegebenen Wert (beispielsweise 3 Euro) überschreiten, oder der älteste Buchungsauftrag mehr als drei Monate zurückliegt, wird der Benutzer des Einkäufersystems 10 aufgefordert, die aufgelaufenen Buchungsbeträge zu begleichen (Schritt 111). Bezahlt der Benutzer den ausstehenden Gesamtbetrag (vgl. Schritt 112), so kann er mit seinem Einkauf fortfahren (vgl. Schritt 104). Andernfalls wird ihm der Zugang zu dem Onlineshop 20 versperrt (vgl. Schritt 112).

Soweit die Kreditwürdigkeit des Einkäufersystems 10 in Ordnung ist, kann der Benutzer mittels des Einkäufersystems 10 einen Einkauf tätigen (vgl. Schritt 104). Beispielsweise kann eine kostenpflichtige Rezension eines Kinofilms eingesehen werden. In einem anderen Ausführungsbeispiel könnte der Benutzer dazu befähigt werden, ein Telefonat über das Internet 1 zu tätigen.

Nach dem Abschluss des Einkaufs leitet der Onlineshop 20 die zugehörige Buchung in Form eines Abbuchungsauftrags an das Bezahlsystem 30, insbesondere an die Schnittstelleneinrichtung 32 weiter (vgl. Schritt 105). Im Schritt 106 wird geprüft, ob für das Einkäufersystem 10 bereits ein Konto existiert. Im Endeffekt wird festgestellt, ob zu der ausgelesenen MAC-Adresse von dem Bezahlungssystem 30 bereits ein Konto angelegt wurde. Soweit kein Konto besteht, wird ein entsprechendes Konto erzeugt (vgl. Schritt 114). Im Schritt 107 speichert das Bezahlsystem 30 (insbesondere die Speichereinrichtung 33) den Abbuchungsauftrag in Verbindung mit der MAC-Adresse. Dem erzeugten Konto wird also ein Eintrag hinzugefügt, der Aufschluss darüber gibt, welche Einkäufe mit der erfassten MAC-Adresse bereits getätigt wurden.

Danach kann sich der Benutzer des Einkäufersystems 10 entscheiden, ob er weitere Einkäufe vornehmen möchte (vgl. Schritt 108). Soweit der Benutzer hieran Interesse hat, kann er beispielsweise durch die Eingabe einer weiteren Internetadresse eine weitere Internetpräsenz eines weiteren Onlineshops 20 abrufen. Dort erfolgt die erneute Erfassung seiner MAC-Adresse, die an das Bezahlsystem 30 weitergeleitet wird (vgl. Schritt 101).

Wie anhand des vorhergehenden Ausführungsbeispiels verdeutlicht, erfolgt also vorerst eine weitestgehend anonyme Erfassung der einzelnen Abbuchungsaufträge durch das Bezahlsystem 30. Das Bezahlsystem 30 bestätigt dem Onlineshop 20 den Buchungsauftrag, so dass der Onlineshop im Wesentlichen von einer abgeschlossenen Bezahlung ausgehen kann. Das Bezahlsystem 30 kann lediglich anhand der MAC-Adresse das Einkäufersystem 10 identifizieren. Die Speichereinrichtung 33 speichert den Abbuchungsauftrag also in Verbindung der entsprechenden MAC-Adresse. Hierfür umfasst das Bezahlsystem 30 eine entsprechende Datenbank, in der entsprechende Tabellen geführt werden. Ein beispielhafter Auszug einer dort geführten Tabelle ist in Fig. 3 gezeigt. Diese umfasst beispielsweise drei Spalten, eine erste Spalte, die die Identifikation eines bestimmten Abbuchungsauftrags enthält, eine zweite Spalte, die den abzubuchenden Betrag enthält und eine dritte Spalte, die das Datum enthält, an dem der Abbuchungsauftrag bei dem Bezahlsystem 30 eingegangen ist. Jede Zeile aus der Tabelle der Fig. 3 korrespondiert mit einem Abbuchungsauftrag. So lässt sich der Tabelle der Fig. 3 beispielsweise entnehmen, dass am 01.07.2009 20 Eurocent für die Identifikationsnummer 222 abgebucht wurden. Des Weiteren wurden am 20. September 2009 5 Eurocent für dieselbe MAC-Adresse abgebucht.

Die Abwicklungseinrichtung 34 kann diese Einträge verwenden, um den Gesamtbetrag der Buchungsbeträge für bestimmte Identifikationsnummern ID zu ermitteln. Beispielsweise beläuft sich dieser Gesamtbetrag für die Identifikationsnummer 222 auf 25 Eurocent.

So kann beispielsweise das Bezahlsystem 30 derart konfiguriert sein, dass ein Benutzer eines Einkäufersystems 10 seine Schulden dann begleichen muss, wenn diese größer als 1 Euro sind. Demgemäß würde für den Benutzer des Einkäufersystems mit der Identifikationsnummer 222 benutzt im Schritt 102 überprüft, ob der von ihm bereits umgesetzte Gesamtbetrag größer als 1 Euro ist. Da dies im in Fig. 3 dargestellten Ausführungsbeispiel nicht der Fall ist, könnte er weitere Einkäufe vornehmen, ohne seine Schulden begleichen zu müssen.

Im vorab beschriebenen Ausführungsbeispiel wurde im Schritt 102 überprüft, ob das Einkäufersystem 10 bereits einen Gesamtbetrag umgesetzt hat, der größer als ein bestimmter Wert (beispielsweise 1 Euro) ist. Zusätzlich kann die Abwicklungseinrichtung 34 im Schritt 102 überprüfen, ob der Benutzer des Einkäufersystems 10 das Bezahlsystem 30 schon länger als ein bestimmtes voreingestelltes Zeitintervall nutzt. Beispielsweise kann die Abwicklungseinrichtung 34 überprüfen, ob der erste Abbuchungsauftrag einer bestimmten Identifikationsnummer ID schon älter als 3 Monate ist. Das Bezahlsystem 30 kann derart konfiguriert sein, dass in diesem Fall eine sofortige Aufforderung zur Begleichung der ausstehenden Beträge erfolgt.

Des Weiteren kann das Bezahlsystem 30 derart konfiguriert sein, dass es dem Benutzer jederzeit eine Möglichkeit anbietet, seine aufgelaufenen Abbuchungsaufträge zu begleichen. Vorzugsweise wird der Benutzer durch das Anbieten von Rabatten dazu angeregt, seine tatsächlichen Zahlungen an das Bezahlsystem 30 zu einem möglichst frühen Zeitpunkt zu leisten.

Zusätzlich kann das Bezahlsystem 30 eine Kontoüberwachungseinrichtung haben, die tatsächliche Zahlungseingänge überwacht und einem Einkäufersystem 10 gutschreibt. Beispielsweise kann eine erfindungsgemäße Registrierung dadurch erfolgen, dass der Benutzer einen Benutzernamen angibt. Im Gegenzug zeigt ihm das Bezahlsystem 30 eine Kontonummer an und fordert ihn auf, den zu entrichtenden Gesamtbetrag auf das entsprechende Konto unter Angabe seines Benutzernamens zu überweisen. Der überwiesene Betrag wird dann dem Konto des von ihm benutzten Einkäufersystems 10 gutgeschrieben.

In einem weiteren Ausführungsbeispiel wird der Benutzername oder ein Zahlungsgrund automatisch generiert. Der Benutzer bleibt also weitestgehend anonym.

In einem anderen Ausführungsbeispiel kann der Benutzer Adressdaten und seinen tatsächlichen Namen angeben und in Verbindung mit diesen Daten seine Kontonummer hinterlegen, so dass das Bezahlsystem 30 die in der Vergangenheit angefallenen Abbuchungsaufträge abbuchen kann. Des Weiteren können die Angaben dazu verwendet werden, zukünftig anfallende Abbuchungsaufträge zeitnah oder in Form einer Sammelabbuchung am Ende eines Monats, eines Quartals oder eines Jahres vorzunehmen.

In den vorab beschriebenen Ausführungsbeispielen wurde eine MAC-Adresse verwendet, um das Einkäufersystem 10 zu identifizieren. Es sollte für den Fachmann offensichtlich sein, dass er an Stelle der MAC-Adresse eine IP-Adresse, eine Identifikationsnummer eines Betriebssystems, eine Identifikationsnummer eines Prozessors oder andere Identifikationsnummern, die Aufschluss über die Identität des Einkäufersystems 10 geben, verwenden kann. Theoretisch ist es auch möglich, mehrere dieser Identifikationsnummern ID zu verwenden, um die Sicherheit des Bezahlsystems 30 zu erhöhen. Des Weiteren können auch nur Teile der genannten Identifikationsnummern verwendet werden, um einen eindeutigen Schlüssel zu erzeugen, der das Einkäufersystem 10 identifiziert.

Im Ausführungsbeispiel nach Fig. 1 wurde ein Einkaufssystem mit nur einem Einkäufersystem 10 und nur einem Onlineshop 20 beschrieben. Üblicherweise wird eine Vielzahl von Einkäufersystemen 10 auf einen Onlineshop 20 zugreifen. Des Weiteren wird eine Vielzahl von Onlineshops 20 vorhanden sein, die ein oder mehrere erfindungsgemäße Bezahlsysteme 30 nutzen.

Vorab wurden Ausführungsbeispiele beschrieben, bei denen eine Identifikation des Einkäufersystems 10 auf eine bestimmte Identifikationsnummer ID ausgerichtet ist, die eine MAC-Adresse, eine IP-Adresse, eine Identifikationsnummer eines Betriebssystems, eine Identifikationsnummer eines Prozessors oder andere Identifikationsnummern, die Aufschluss über die Identität des Einkäufersystems 10 gibt, oder Teile dieser umfasst. Es ist möglich eine Kombination der Verfahren vorzunehmen. Es können also unterschiedliche Identifikationsnummern ID, die sich z.B. auf eine Mac-Adresse oder eine IP-Adresse oder eine Identifikationsnummer eines Prozessors, beziehen, abgefragt werden. Am Schluss werden die Identifikationsnummern ID verwendet, die von dem Einkäufersystem 10 bereitgestellt werden.

Zusätzlich ist es möglich, einzelne Identifikationsnummern ID gemäß einer Reihenfolge abzufragen. Diese Reihenfolge kann z.B. auf der Wahrscheinlichkeit beruhen mit der ein bestimmtes Einkäufersystem 10 die Nummer bzw. die Zeichenkette bereitstellt. So kann das Bezahlsystem 30 erst nach einer MAC-Adresse suchen. Wenn diese nicht bestimmt werden kann, dann wird die Prozessoridentifikationsnummer, usw. abgefragt werden. Weiterhin ist es denkbar, ein Cookie zu setzen.

Der Benutzer kann so durch ein digital signiertes Cookie einem Datensatz eindeutig zugeordnet werden. Die signierten Daten können einen aus allen bisher bekannten Benutzerdaten gebildeten Kombinationswert umfassen, um den Missbrauch zu erschweren. Das Cookie kann über mehrere Techniken auf dem Einkäufersystem 10 gespeichert (z.B. als Flash-Cookie) und somit, soweit möglich, gegen späteres Löschen abgesichert werden. Sollte bei einem späteren Kontakt mit dem Bezahlsystem 30 das Cookie in einem Cookiespeicher gelöscht worden sein, so kann es wiederhergestellt werden. Das Cookie kann auch einen Parameter umfassen, der angibt, ob der Benutzer bereits angemeldet bzw. eingeloggt ist. Der Benutzer kann sich jederzeit an einem Interface des Bezahlsystems 30 einloggen, um seine Kontoinformationen einzusehen.

In einer weiteren Ausführungsform der Erfindung kann das Bezahlsystem 30 einen von dem Benutzer bereitgestellten Code verwenden, um sich gegenüber dem Bezahlsystem zu identifizieren. Der Code kann als Identifikationsnummer ID dienen und anstelle einer Hardwareidentifikationsnummer, z.B. der MAC-Adresse, des Einkäufersystems 10 verwendet werden. Es ist ebenfalls denkbar, dass der eingegebene Code zu den bereits genannten Identifikationsnummern ID, z.B. einer abgefragten Hardwareidentifikationsnummer, verwendet wird.

Der Code kann beispielsweise eine IMSI (International Mobile Subscriber Identity) sein. Der Benutzer des Einkäufersystems 10 gibt also die IMSI seines Mobiltelefons ein und das Bezahlsystem 30 legt diesbezüglich ein Konto an oder addiert die Buchungsbeträge auf das bereits vorhandene Konto auf. Das Bezahlsystem 30 kann die Korrektheit des angegebenen Codes - also der IMSI - dadurch verifizieren, dass es eine Nachricht, z.B. mittels SMS (Short Message Service), an das entsprechende Mobiltelefon versendet. Das Bezahlsystem 30 kann den Benutzer dann dazu auffordern, den Empfang der Nachricht, z.B. durch das Zurücksenden der Nachricht oder die Eingabe eines Codes, zu quittieren, wobei eine Benutzung des Bezahlsystems 30 dann unterbunden wird, wenn die Nachricht nicht quittiert wird. Die genannte Verifikation kann nur einmal, vorzugsweise beim Anlegen des Kontos, oder bei jedem Bezahlvorgang erfolgen.

Um das Risiko nicht-zahlender Benutzer (z.B.: Ein Benutzer benutzt das Bezahlsystem 30 bis er aufgefordert wird, seine Schulden zu begleichen. Dann begleicht er aber seine Schulden nicht, sondern verzichtet auf die weitere Nutzung des Bezahlsystems 30.) soweit wie möglich zu minimieren, kann das Bezahlsystem 30 eine Auswertungseinrichtung umfassen. Diese Auswertungseinrichtung erhebt vorzugsweise kontinuierlich statistische Daten über die getätigten Abbuchungsaufträge und/oder die Identifikationsnummern ID. Es können weitere Daten erfasst und verwertet werden, die Hinweise auf die Art der getätigten Einkäufe und/oder den Aufenthaltsort des Benutzers geben. Beispielsweise kann die IP-Adresse der Benutzer verwendet werden, um dessen Aufenthaltsort grob zu bestimmen. Des Weiteren kann anhand der IP-Adresse der von dem Benutzer verwendete Internetprovider, ein RIPE-Verantwortlicher oder ähnliches bestimmt werden. Die Auswertungseinrichtung kann die gesammelten statistischen Daten verwenden, um die Zahlungsschwelle anzupassen.

Beispielsweise kann ein Benutzer, der aufgrund seiner IP-Adresse einer Gruppe zugeordnet wird, die statistisch über eine gute Bonität verfügt, Abbuchungsaufträge vornehmen, bis sein Konto eine negative Bilanz von größer als zwei Euro aufweist, während ein Benutzer, der aufgrund seiner IP-Adresse einer Gruppe mit schlechterer Bonität zugeordnet wird, nur Abbuchungsaufträge bis zu einer Gesamtsumme von einem Euro vornehmen darf. Theoretisch kann das Bezahlsystem 30 eine Abbuchung vor der Registrierung gänzlich unterbinden, wenn der Benutzer einer Gruppe mit sehr schlechter Bonität zugeordnet wird. Die Statistik wird von der Auswertungseinrichtung vorzugsweise in einer Datenbank geführt und kann beim Erstkontakt mit dem Benutzer entsprechend analysiert werden.

Wie bereits erläutert, kann die Identifikationsnummer ID zumindest teilweise aus Daten bestehen oder abgeleitet werden, die in einem Cookie gespeichert sind, das auf dem Einkäufersystem 10 hinterlegt ist. Vorzugsweise werden die relevanten Daten mehrfach auf dem Einkäufersystem 10 hinterlegt, um ein Löschen dieser zu vermeiden. Beispielsweise können mehrere Cookies auf dem Einkäufersystem 10 abgelegt werden, wobei ein erstes vom Bezahlsystem 30 unmittelbar und ein zweites mittels des Onlineshops 20 dort gespeichert werden. Insofern kann das Bezahlsystem 30 die Identifikationsnummer ID direkt von dem Einkäufersystem 10 abfragen und den abgefragten Wert mit einem vom Onlineshop 20 bereitgestellten Wert vergleichen. Um die Sicherheit und Anonymität zu erhöhen, kann dem Onlineshop 20 die Identifikationsnummer ID in verschlüsselter Form bereitgestellt werden, so dass dem Onlineshop 20 eine unmittelbare Zuordnung des Benutzers zu einer bestimmten Identifikationsnummer ID nicht möglich ist. Sobald der Benutzer denselben Onlineshop 20 noch einmal besucht, frägt dieser die Identifikationsnummer ID ab und leitet diese an das Bezahlsystem weiter. Des Weiteren kann das Einkäufersystem 10 ebenfalls auf eine Webseite des Bezahlsystems 30 weitergeleitet werden, die das weitere Cookie mit einer weiteren oder der gleichen Identifikationsnummer ID abfragt.

Für den hier tätigen Fachmann sollte es offensichtlich sein, dass es weitere Möglichkeiten gibt, die Identifikationsnummer ID dem Einkäufersystem 10 zuzuordnen. Beispielsweise können dem Internet zu Grunde liegende Kommunikationsprotokolle so verändert werden, dass sie eindeutige Rückschlüsse auf das verwendete Einkäufersystem 10 zulassen. So verwenden übliche Browser ein Caching der abgefragten Webseiten, um deren Zugriff schnell und einfach zu gestalten. Es ist nötig, einzelne gecachte Elemente mit einer (Web-) Identifikationsnummer zu versehen, so dass beim erneuten Aufruf einer Seite von dem Einkäufersystem 10 eine aktualisierte Version des mit der Identifikationsnummer versehenen Objekts angefordert wird. Diese Anfrage des Einkäufersystems 10 ermöglicht es dem Bezahlsystem 30 das Einkäufersystem eindeutig zu identifizieren.

Weiterhin können URLs so modifiziert werden, dass sie die Identifikationsnummer ID oder einen Teil dieser wiedergeben.

### Bezugszeichenliste

- 1: Internet
- 10: Einkäufersystem
- 20: Onlineshop
- 30: Bezahlsystem
- 31: Identifikationseinrichtung
- 32: Schnittstelleneinrichtung
- 33: Speichereinrichtung
- 34: Abwicklungseinrichtung
- ID: Identifikationsnummer
- 101: Schritt 101: Bezahlsystem erfasst die MAC-Adresse des Einkäufersystems
- 102: Schritt 102: Ist das Einkäufersystem kreditwürdig?
- 104: Schritt 104: Der Benutzer tätigt einen Einkauf
- 105: Schritt 105: Der Onlineshop leitet eine zugehörige Buchung weiter
- 106: Schritt 106: Existiert ein Konto für die MAC-Adresse?
- 107: Schritt 107: Das Bezahlsystem speichert den Abbuchungsauftrag
- 108: Schritt 108: Weitere Einkäufe?
- 111: Schritt 111: Zahlungsaufforderung
- 112: Schritt 112: Bezahlt der Benutzer?
- 113: Schritt 113: Zugang sperren
- 114: Schritt 114: Konto erzeugen

## Patentansprüche

1. Bezahlsystem für mindestens einen Onlineshop (20), umfassend:
- eine Identifikationseinrichtung (31) zum Erfassen mindestens einer Identifikationsnummer eines Einkäufersystems (10), wobei die Identifikationseinrichtung (31) ein auf dem Einkäufersystem (10) auszuführendes Programm bereitstellt, um die mindestens eine Identifikationsnummer (ID) zu erfassen, wobei die Identifikationsnummer (ID) eine Hardwareidentifikationsnummer umfasst, die zumindest einen Teil einer MAC-Adresse und/oder einer Prozessoridentifikationsnummer und/oder einer Kontrolleridentifikationsnummer und/oder einer Festplattenidentifikationsnummer und/oder einer IP-Adresse umfasst;
- eine Schnittstelleneinrichtung (32) zum Empfangen und Bestätigen von Abbuchungsaufträgen von dem mindestens einen Onlineshop (20), wobei die Buchungsaufträge Informationen bezüglich eines an den Onlineshop (20) zu zahlenden Buchungsbetrags umfassen;
- eine Speichereinrichtung (33) zum Speichern der Abbuchungsaufträge in Verbindung mit den zugehörigen Identifikationsnummern (ID);
- eine Abwicklungseinrichtung (34), die derart ausgebildet ist, dass sie den Gesamtbetrag der Buchungsbeträge bezüglich der Identifikationsnummer (ID) überwacht und einen Benutzer des Einkäufersystems (10) nach einem voreingestellten Zeitintervall und/oder beim Überschreiten eines voreingestellten Werts des Gesamtbetrags auffordert sich zu registrieren, um zumindest einen Teil des Gesamtbetrags zu begleichen.

2. Bezahlsystem nach Anspruch 1,
**dadurch gekennzeichnet, dass**
die Abwicklungseinrichtung (34) derart ausgebildet ist, dass sie bis zur Registrierung keine persönlichen Daten, insbesondere keine Zahlungsinformationsdaten von dem Benutzer des Einkäufersystems (20), abfragt.

3. Bezahlsystem nach Anspruch 1 oder 2,
**dadurch gekennzeichnet, dass**
die Speichereinrichtung (33) derart ausgebildet ist, dass sie die Abbuchungsaufträge bis zur Registrierung ausschließlich mit Referenzdaten bezüglich des Einkäufersystems (10) abspeichert.

4. Bezahlsystem nach einem der vorhergehenden Ansprüche,
**dadurch gekennzeichnet, dass**
die Schnittstelleneinrichtung (32) eine Sperrliste von Identifikationsnummern (ID) umfasst und derart ausgebildet ist, dass sie Abbuchungsaufträge ablehnt, die sich auf eine Identifikationsnummer (ID) beziehen, die in der Sperrliste enthalten ist, wobei die Abwicklungseinrichtung (34) dazu ausgebildet ist, Identifikationsnummern (ID) von Einkäufersystemen (10) in der Sperrliste zu speichern, deren Benutzer sich nach dem voreingestellten Zeitintervall und/oder beim Überschreiten des voreingestellten Gesamtbetrags nicht registrieren, um den Gesamtbetrag zumindest teilweise zu begleichen.

5. Einkaufssystem, umfassend:
eine Vielzahl von Onlineshops (20) und mindestens ein Bezahlsystem (30) nach einem der vorhergehenden Ansprüche.

6. Einkaufssystem nach Anspruch 5,
**dadurch gekennzeichnet, dass**
mindestens einer der Onlineshops (20) einen Webserver zur Bereitstellung insbesondere eines HTML-basierten Verkaufsportals umfasst, wobei mindestens ein Objekt zur Abwicklung von Buchungsaufträgen in das Verkaufsportal eingebettet ist, das mit dem Bezahlsystem in kommunikativer Verbindung steht.

7. Einkaufssystem nach Anspruch 6,
**dadurch gekennzeichnet, dass**
das eingebettete Objekt zur Ausgabe von Informationen bezüglich des Bezahlungssystems (30), insbesondere einer Zahlungsaufforderung und/oder einem Kontostand, ausgebildet ist.

8. Verfahren zum Durchführen einer Vielzahl von Bezahlvorgängen, umfassend:
- ein Speichern einer Identifikationsnummer (ID) eines Einkäufersystems (10), mittels dessen in einem Onlineshop (20) ein Einkauf in Höhe eines bestimmten Einkaufsbetrags getätigt wird, wobei die Identifikationsnummer (ID) eine Hardwareidentifikationsnummer umfasst, die zumindest einen Teil einer MAC-Adresse und/oder einer Prozessoridentifikationsnummer und/oder einer Kontrolleridentifikationsnummer und/oder einer Festplattenidentifikationsnummer und/oder einer IP-Adresse umfasst;
- ein Speichern des Einkaufsbetrags in Verbindung mit der Identifikationsnummer (ID) durch ein Bezahlsystem (30);
- ein Überwachen des Gesamtbetrags der mittels des Einkäufersystems (10) getätigten Einkäufe durch das Bezahlsystem (30);
ein Aussenden einer Aufforderung zur Begleichung mindestens eines Teils des Gesamtbetrags an einen Benutzer des Einkäufersystems (10), wenn der Gesamtbetrag einen voreingestellten Wert überschreitet und/oder nach dem Ablauf eines voreingestellten Zeitintervalls.

9. Verfahren nach Anspruch 8,
**gekennzeichnet durch**
ein Registrieren eines Benutzers nach dem Aussenden der Aufforderung.

10. Verfahren nach Anspruch 9,
**dadurch gekennzeichnet, dass**
das Registrieren ein Erfassen von Konto- und/oder Kreditkarteninformationen umfasst.

11. Verfahren nach einem der Ansprüche 8-10 bzw. Bezahlsystem nach einem der Ansprüche 1-3,
**dadurch gekennzeichnet, dass**
das Einkäufersystem (10) einen PC und/oder ein Mobilgerät umfasst.

12. Verfahren nach einem der Ansprüche 8-10 bzw. Bezahlsystem nach einem der Ansprüche 1-3,
**dadurch gekennzeichnet, dass**
das Zeitintervall größer als 10 Tage und/oder größer als 1 Monat und/oder größer als 3 Monate ist.

## Claims

1. Payment system for at least one online shop (20), comprising:
- an identification device (31) for recording at least one identification number of a shopper system (10), wherein the identification device (31) provides a program which can be executed on the shopper system (10) to record the at least one identification number (ID), the identification number (ID) comprising a hardware identification number, the hardware identification number comprising at least part of a MAC address and/or a processor identification number and/or a controller identification number and/or a hard disk identification number and/or an IP address;
- an interface device (32) for receiving and confirming direct debit orders from the at least one online shop (20), wherein the debit orders comprise information relating to a debit amount to be paid to the online shop (20);
- a memory device (33) for storing the direct debit orders in conjunction with the associated identification numbers (ID);
- a processing device (34) which is configured to monitor the total payable of the debit amounts in relation to the identification number (ID) and to request a user of the shopper system (10) to register after a predetermined time interval and/or on exceeding a predetermined value of the total payable, in order to settle at least part of the total payable.

2. Payment system according to claim 1, **characterised in that** the processing device (34) is configured such that, until registration, said system does not request any personal data and, in particular, no payment information from the user of the shopper system (20).

3. Payment system according to claim 1 or 2, **characterised in that** the memory device (33) is configured such that, until registration, said device stores the direct debit orders exclusively with reference data relating to the shopper system (10).

4. Payment system according to any of the preceding claims, **characterised in that** the interface device (32) comprises a blacklist of identification numbers (ID) and is configured such that said device refuses direct debit orders relating to an identification number (ID) contained in the blacklist, wherein the processing device (34) is configured to store in the blacklist identification numbers (ID) of shopper systems (10) the users of which do not register after the predetermined time interval and/or on exceeding the predetermined total payable in order to settle at least part of the total payable.

5. Shopping system, comprising:
a plurality of online shops (20) and at least one payment system (30) according to one of the preceding claims.

6. Shopping system according to claim 5, **characterised in that** at least one of the online shops (20) comprises a web server to provide, in particular, an HTML-based sales portal, wherein at least one object is embedded in the sales portal for processing debit orders and has a communication link to the payment system.

7. Shopping system according to claim 6, **characterised in that** the embedded object is configured for outputting information regarding the payment system (30), particularly a payment demand and/or an account balance.

8. Method for performing a plurality of payment transactions, comprising:
- storage of an identification number (ID) of a shopper system (10) by means of which a purchase is transacted in an online shop (20) in the amount of a particular purchase sum, wherein the identification device (31) provides a program which can be executed on the shopper system (10) to record the at least one identification number (ID), the identification number (ID) comprising a hardware identification number, the hardware identification number comprising at least part of a MAC address and/or a processor identification number and/or a controller identification number and/or a hard disk identification number and/or an IP address;
- storage by a payment system (30) of the purchase sum, in conjunction with the identification number (ID);
- monitoring by the payment system (30) of the total payable from the purchases transacted by means of the shopper system (10);
- issuing, to a user of the shopper system (10), of a request for settlement of at least part of the total payable when the total payable exceeds a predetermined value and/or after a predetermined time interval has elapsed.

9. Method according to claim 8, **characterised by** registration of a user following issuing of the request.

10. Method according to claim 9, **characterised in that** registration comprises recording account and/or credit card information.

11. Method according to one of the claims 8-10 or payment system according to one of the claims 1-3, **characterised in that** the shopper system (10) comprises a PC and/or a mobile device.

12. Method according to one of the claims 8-10 or payment system according to one of the claims 1-3, **characterised in that** the time interval is greater than 10 days and/or greater than 1 month and/or greater than 3 months.

## Revendications

1. Système de paiement pour au moins un magasin en ligne (20), comprenant :
- un dispositif d'identification (31) pour détecter au moins un numéro d'identification d'un système d'acheteur (10), le dispositif d'identification (31) fournissant un programme à exécuter sur le système d'acheteur (10) afin de détecter l'au moins un numéro d'identification (ID), le numéro d'identification (ID) comprenant un numéro d'identification de matériel qui comprend au moins une partie d'une adresse MAC et/ou d'un numéro d'identification de processeur et/ou d'un numéro d'identification de contrôleur et/ou d'un numéro d'identification de disque dur et/ou d'une adresse IP ;
- un dispositif d'interface (32) pour recevoir et confirmer des ordres de débit par l'au moins un magasin en ligne (20), les ordres de débit comprenant des informations relatives à un montant comptable à verser au magasin en ligne (20) ;
- un dispositif de mémoire (33) pour mémoriser les ordres de débit en liaison avec les numéros d'identification associés (ID) ;
- un dispositif de déroulement (34) qui est réalisé de telle sorte qu'il contrôle le montant total des montants comptables se rapportant au numéro d'identification (ID) et demande à un utilisateur du système d'acheteur (10) après un intervalle de temps préajusté et/ou lors du dépassement d'une valeur préajustée du montant total de s'enregistrer afin de régler au moins une partie du montant total.

2. Système de paiement selon la revendication 1,
**caractérisé en ce que**
le dispositif de déroulement (34) est réalisé de telle sorte qu'il ne demande aucune donnée personnelle, en particulier aucune donnée d'information de paiement à l'utilisateur du système d'acheteur (20) tant qu'il ne s'est pas enregistré.

3. Système de paiement selon la revendication 1 ou 2,
**caractérisé en ce que**
le dispositif de mémoire (33) est réalisé de telle sorte qu'il mémorise les ordres de débit jusqu'à l'enregistrement exclusivement avec des données de référence relatives au système d'acheteur (10).

4. Système de paiement selon l'une quelconque des revendications précédentes,
**caractérisé en ce que**
le dispositif d'interface (32) comprend une liste noire de numéros d'identification (ID) et est réalisé de telle sorte qu'il refuse des ordres de débit qui se rapportent à un numéro d'identification (ID) contenu dans la liste noire, le dispositif de déroulement (34) étant réalisé de manière à mémoriser dans la liste noire des numéros d'identification (ID) de systèmes d'acheteur (10) dont les utilisateurs, après l'intervalle de temps préajusté et/ou lors du dépassement du montant total préajusté, ne s'enregistrent pas pour régler au moins en partie le montant total.

5. Système d'achat comprenant :
une pluralité de magasins en ligne (20) et au moins un système de paiement (30) selon l'une quelconque des revendications précédentes.

6. Système d'achat selon la revendication 5,
**caractérisé en ce**
**qu'**au moins un magasin en ligne (20) comprend un serveur web pour fournir notamment un portail d'achat basé sur le format HTML, au moins un objet de déroulement d'ordres de débit étant incorporé dans le portail d'achat, lequel est en liaison de communication avec le système de paiement.

7. Système d'achat selon la revendication 6,
**caractérisé en ce que**
l'objet incorporé est réalisé pour délivrer des informations relatives au système de paiement (30), en particulier une demande de paiement et/ou un état de compte.

8. Procédé pour mettre en oeuvre une pluralité d'opérations de paiement, comprenant :
- une mémorisation d'un numéro d'identification (ID) d'un système d'acheteur (10) au moyen duquel un achat à la hauteur d'un montant d'achat déterminé est activé dans un magasin en ligne (20), le numéro d'identification (ID) comprenant un numéro d'identification de matériel, qui comprend au moins une partie d'une adresse MAC et/ou d'un numéro d'identification de processeur et/ou d'un numéro d'identification de contrôleur et/ou d'un numéro d'identification de disque dur et/ou d'une adresse IP ;
- une mémorisation du montant d'achat en liaison avec le numéro d'identification (ID) par un système de paiement (30) ;
- un contrôle du montant total des achats activés au moyen du système d'acheteur (10) par le système de paiement (30) ;
- un envoi d'une demande de règlement d'au moins une partie du montant total à un utilisateur du système d'acheteur (10), lorsque le montant total dépasse une valeur préajustée et/ou après l'écoulement d'un intervalle de temps préajusté.

9. Procédé selon la revendication 8,
**caractérisé par**
un enregistrement d'un utilisateur après l'envoi de la demande.

10. Procédé selon la revendication 9,
**caractérisé en ce que**
l'enregistrement comprend une détection d'informations de compte et/ou de carte de crédit.

11. Procédé selon l'une quelconque des revendications 8 à 10 ou système de paiement selon l'une quelconque des revendications 1 à 3,
**caractérisé en ce que**
le système d'acheteur (10) comprend un PC et/ou un appareil mobile.

12. Procédé selon l'une quelconque des revendications 8 à 10 ou système de paiement selon l'une quelconque des revendications 1 à 3,
**caractérisé en ce que**
l'intervalle de temps est supérieur à 10 jours et/ou supérieur à un mois et/ou supérieur à 3 mois.
